# EUROPEAN PATENT APPLICATION

(11) **EP 1 589 370 A1**
(43) Date of publication of application: **26.10.2005**
(21) Application number: 03701886.8
(22) Date of filing: 27.01.2003
(51) Int. Cl.: G02F 1/295, G02F 1/055, G02F 1/035

(54) **OPTICAL DEFLECTION DEVICE, AND MANUFACTURING METHOD THEREOF**

(71) Applicant: FUJITSU LIMITED, Kawasaki-shi, Kanagawa 211-8588 (JP)
(72) Inventor: KONDO, Masao, c/o FUJITSU LIMITED, Kawasaki-shi, Kanagawa 211-8588 (JP); YAMAWAKI, Hideki, c/o FUJITSU LIMITED, Kawasaki-shi, Kanagawa 211-8588 (JP)
(74) Representative: HOFFMANN EITLE
(86) International application number: PCT/JP2003/000736
(87) International publication number: WO 2004/068235

(57) **Abstract**

A disclosed optical deflection element includes a magnesia spinel film 22, a lower electrode 23, a lower cladding layer 24, a core layer 25, and an upper cladding layer 26, which are sequentially stacked formed on a silicon single crystal substrate 21. The magnesia spinel film 22, the lower electrode 23, a PLZT film acting as the lower cladding layer 24, and a PZT film acting as the core layer 25 are epitaxially grown on respective underlying layers thereof. Because of a voltage applied between the lower electrode 23 and the upper electrode 26, refractive index variable regions 25A, 24A, in which the refractive index varies, are formed due to the electro-optical effect. Light incident into the core layer 25 is deflected at the interface between the core layer 25 and the refractive index variable regions 25A, 24A to the inner side relative to the surface of the core layer 25.

## Description

### TECHNICAL FIELD

The present invention generally relates to an optical deflection element utilized in optical communication and a method of producing the optical deflection element, and particularly, to an optical deflection element that deflects a light beam in an optical waveguide by an electro-optical effect, and a method of producing the optical deflection element.

### TECHNICAL BACKGROUND

Along with growing capacity of data transmitted in communication, optical communication technology using light as a medium becomes more and more important. Especially, fiber networks have been extended to homes, and it is expected that users will rapidly increase. In order for a large number of users of the fiber networks to transmit data efficiently, optical switches of high quality are required which have low transmission loss and many channels for switching.

The optical switches which are proposed presently include MEMS (Micro Electronic Mechanical System) optical switches, bubble optical switches, thin film waveguide optical switches, and others. In the thin film waveguide, a multilayer structure including a cladding layer, a core layer, and a cladding layer is provided on a substrate, and light is transmitted in the core layer. Among these layers, particularly, if the core layer is made from a material exhibiting the so-called electro-optical effect, that is, the refractive index of the material changes upon application of an electric field, it is possible to deflect the light by just applying an electric field. Compared to a MEMS optical switch and a bubble optical switch, a thin film waveguide optical switch following the above principle does not have micro mechanical driving parts or a complicated structure, hence it is expected that the fabrication cost can be reduced.

It is well known that many materials have electro-optical effects, but at present there are only several oxides which have largely variable refractive indexes when an electric field is applied. The electro-optical effect originates from specific arrangements of atoms constituting a material, namely, crystal properties, and in an amorphous state, the electro-optical effect does not appear or is greatly reduced. Usually, when using oxides, the materials with the electro-optical effect can be obtained by heating to several hundreds degrees Celsius for crystallization with oxygen being present. Considering mounting of thin films from these materials, it is ideal to use single crystal oxide films having uniform composition and without defects, because high light transmittance, electro-optical effect, and single mode operation are obtainable.

However, in many cases, it is difficult to obtain single crystal oxide films, and usually only polycrystalline films can be obtained. In a polycrystalline film, because defects such as grain boundaries exist, the light transmittance is low compared to a single crystal film. Generally, for a crystal having a larger size, and more aligned in a specific plane direction, the light transmittance tends to increase. Hence, in order to obtain an optical switch having low loss, an epitaxial film (three-axis aligned film) is desirable that is aligned not only in a direction perpendicular to a substrate, but also inside the plane of the substrate.

In the related art, in order to obtain an epitaxial oxide film having high light transmittance and low loss, an oxide single crystal substrate made from such as magnesium oxide (MgO), strontium titanate (SrTiO₃), or others are used. Because these substrates are not conductive, first a metal film made from, for example, platinum, is epitaxially grown, then, inheriting the crystalline arrangement, an oxide crystal film can be obtained by epitaxial growth.

However, the commonly used oxide single crystal substrates are about 2 inches in size, and it is difficult to make them large. In addition, from the point of view of price, there are also difficulties in practical use, because a two-inch MgO substrate costs as much as several hundreds thousands Yen, while a six-inch silicon single crystal substrate costs only a few thousands yen. For this reason, using a silicon single crystal substrate to grow an epitaxial oxide film is under study.

In order to grow an epitaxial film on a silicon single crystal substrate, it is necessary to utilize the orientation of the surface of the silicon single crystal substrate. However, the surface of the silicon single crystal substrate is apt to be oxidized when being exposed to an oxygen atmosphere at a high temperature, hence producing a silicon oxide film (SiOₓ). Because the silicon oxide film formed by thermal oxidation is amorphous, and does not have a specific orientation, an epitaxial film cannot be grown on this silicon oxide film.

In addition, in order to grow an epitaxial film, it is also important to minimize reactions and diffusions between the film to be grown and the silicon single crystal substrate. So far, it is reported that only a few materials are able to be epitaxially grown on the silicon single crystal substrate, including oxides of rare earth elements such as yttrium stabilized zirconia (YSZ) and cerium dioxide (CeO₂), magnesium oxide (MgO), magnesia-spinel (MgAl₂O₄), and strontium titanate (SrTiO₃). Further, it has been attempted to form an epitaxial oxide film having a perovskite structure on an intermediate layer formed from crystal layers of the above materials.

It is known that, for example, as disclosed in Japanese Laid Open Patent Application No. 55-61035 and Matsubara et al, J. Appl. Phys. Vol. 66, (1989) pp. 5826, among the above intermediate layers, a magnesia-spinel epitaxial film is grown on a (001) plane of a silicon substrate with the (001) plane as a principal plane, furthermore, a (001) plane of a crystal having a perovskite structure is epitaxially grown thereon.

In order to use a stacked structure including a magnesia-spinel film on a silicon single crystal substrate and a crystal having a perovskite structure as an optical deflection element, it is necessary to provide electrodes above and below the crystal having the perovskite structure for applying an electrical field. Namely, it is necessary to provide a conductive film between an oxide epitaxial film having the perovskite structure and the magnesia-spinel film.

However, if the conductive film is not sufficiently crystallized, the crystalline arrangement of the perovskite oxide film degrades, resulting in an increase in optical propagation loss, and degradation of the electro-optical effect.

### DISCLOSURE OF THE INVENTION

A general object of the present invention is to provide a novel and useful optical deflection element and a method of fabricating the same to solve the above problems.

A specific object of the present invention is to provide an optical deflection element that is low in optical propagation loss, superior in optical properties, and low in fabrication cost.

According to an aspect of the present invention, there is provided an optical deflection element, comprising: a single crystal substrate; an intermediate layer formed on the single crystal substrate, said intermediate layer being formed from a magnesia spinel film; a lower electrode formed on the intermediate layer, said lower electrode being formed from a conductive layer including a platinum group metal; a first oxide layer formed on the lower electrode; a second oxide layer formed on the first oxide layer; and an upper electrode formed on the second oxide layer, wherein the intermediate layer, the lower electrode, the first oxide layer, and second oxide layer are epitaxial films; and a refractive index of the second oxide layer is greater than a refractive index of the first oxide layer.

According to the present invention, the intermediate layer, the lower electrode, the first oxide layer, and the second oxide layer formed on the single crystal substrate are epitaxial films acceding the crystalline arrangement of the single crystal substrate. Hence, because the second oxide layer, which acts as an optical waveguide, is an epitaxial film, it is superior in crystallinity. As a result, the optical property is superior, and it is possible to reduce the optical propagation loss.

Here, an epitaxial film is a film formed to have a relationship in crystal orientation between a substrate, on which the epitaxial film to be formed, or a crystal constituting an underlying layer. Therefore, an epitaxial film not only has a crystalline orientation in the growing direction, but also has a crystalline orientation in the plane of the substrate.

The single crystal substrate may be a silicon single crystal substrate. Compared to MgO or other oxide single crystal substrates which are used in the optical deflection element in the related art, the silicon single crystal substrate can be made large and is inexpensive, thereby enabling great reduction of fabrication cost of the optical deflection element.

An amorphous layer may be formed between the single crystal substrate and the intermediate layer.

The intermediate layer on the single crystal substrate is formed by epitaxial growth. Therefore, the surface of the single crystal substrate and the intermediate layer thereon, namely, the magnesia spinel film, form a heteroepitaxial structure, and their interface is firmly bonded. As a result, even when it is desired to rearrange atoms constituting the magnesia spinel film by thermal treatment, this re-arrangement turns out to be constrained by atom arrangements on the crystal surface of the single crystal substrate.

With a magnesia spinel film being formed on a single crystal substrate, if an amorphous layer is formed on the interface of them, this constraint may be eliminated, and it enables self re-arrangement of the magnesia spinel film. As a result, the crystallinity of the magnesia spinel film are improved, and the lower electrode, the first oxide layer, and the second oxide layer formed on the magnesia spinel film accedes the good crystallinity, and the crystallinity of them are also improved.

The second oxide layer may have an electro-optical effect. By applying a voltage on the lower electrode and the upper electrode, a region of a variable refractive index is formed in the second oxide layer, and it is possible to deflect the traveling direction of the light beam being propagated in the plane of the second oxide layer.

At least one of the first oxide layer and the second oxide layer may have a crystal structure including a simple perovskite lattice. An oxide layer having a simple perovskite lattice has the electro-optical effect, for example, exhibiting a large Pockels effect or a large Kerr effect. Hence, the refractive index can change greatly, and the deflection angle can be increased.

The single crystal substrate, the intermediate layer, and the lower electrode may have a (001) crystal orientation in a layer-stacking direction. Furthermore, the first oxide layer and the second oxide layer may have a (001) crystal orientation in the layer-stacking direction. Among the crystal orientations of the first oxide layer and the second oxide layer, the direction in which the spontaneous polarization becomes a maximum, that is, the direction of the polarization axis (001) in a tetragonal phase, is set to be parallel to the direction of the applied electric field given by the lower electrode and the upper electrode. The first-order electro-optical constant of an oxygen octahedral ferroelectric material, such as an oxide layer having a perovskite structure, is expressed by a product of its dielectric constant, the magnitude of the spontaneous polarization, and its second-order electro-optical constant. Because the direction of the polarization axis of an oxide having a tetragonal crystalline perovskite structure is (001), the direction of the polarization axis turns out to be the same as the direction of the applied electric field given by the lower electrode and the upper electrode. Thus, the electro-optical effect becomes a maximum, and this can increase a variable range of the refractive index. As a result, it is possible to increase the deflection angle.

A third oxide layer may be formed between the second oxide layer and the upper electrode by epitaxial growth on the second oxide layer, and the refractive index of the second oxide layer may be greater than the refractive index of the first oxide layer and a refractive index of the third oxide layer.

With the third oxide layer as a cladding layer, a waveguide optical deflection element is formed in which the second oxide layer is sandwiched by the first oxide layer and the third oxide layer. Because the third oxide layer is also formed by epitaxial growth on the second oxide layer, it is superior in crystallinity, hence, it is possible to suppress loss due to divergence of the light beam from the second oxide layer.

According to another aspect of the present invention, there is provided a method of forming an optical deflection element, comprising the steps of forming an intermediate layer on a single crystal substrate from magnesia spinel; forming a lower electrode on the intermediate layer from a conductive layer including a platinum group metal; forming a first oxide layer on the lower electrode; forming a second oxide layer on the first oxide layer; and forming an upper electrode on the second oxide layer, wherein the intermediate layer, the lower electrode, the first oxide layer, and the second oxide layer are formed by epitaxial growth.

According to the present invention, the intermediate layer, the lower electrode, the first oxide layer, and the second oxide layer formed on the single crystal substrate are epitaxial films acceding the crystalline arrangement of the single crystal substrate. Hence, because the second oxide layer, which acts as an optical waveguide, is an epitaxial film, it is superior in crystallinity. As a result, the optical property is superior, and it is possible to reduce the optical propagation loss.

Between the step of forming the intermediate layer and the step of forming the lower electrode, there may be further a step of a thermal treatment in an atmosphere including oxygen gas or water vapor. Due to the thermal treatment, a thermal oxide film is formed at an interface between the intermediate layer and the single crystal substrate. Hence, bonding is eliminated between the single crystal substrate having a heteroepitaxial structure and the intermediate layer, and this enables self re-arrangement of the magnesia spinel film, which functions as the intermediate layer, by a thermal treatment. As a result, the crystallinity of the magnesia spinel film are further improved, and the lower electrode, the first oxide layer, and the second oxide layer formed on the magnesia spinel film accede the good crystallinity, and the crystallinity of them are also improved.

### BRIEF DESCRIPTION OF THE DRAWINGS

These and other objects, features, and advantages of the present invention will become more apparent with reference to the following drawings accompanying the detailed description of the present invention.
FIG. 1 is a cross-sectional view of a stacked structure as a basis of an optical deflection element according to the present invention;
FIG. 2 is a flowchart illustrating a process of fabricating the stacked structure in FIG. 1;
FIG. 3 shows an X-ray diffraction pattern of a thin film stacked structure 16 including a silicon single crystal substrate 11, the magnesia-spinel layer 12, a platinum-group metal 13 in the stacked structure 10;
FIG. 4A shows an X-ray diffraction pattern of the (202) plane of a platinum film;
FIG. 4B shows an X-ray diffraction pattern of the (404) plane of a magnesia-spinel film;
FIG. 4C shows an X-ray diffraction pattern of the (202) plane of a silicon single crystal substrate;
FIG. 5A shows a rocking curve of the (002) plane of a platinum film of the thin film stacked structure 16;
FIG. 5B shows a rocking curve of the (002) plane of a platinum film epitaxially grown on a MgO single crystal substrate, not concerned with the present invention;
FIG. 6 shows an X-ray diffraction pattern of the (222) plane of a PLZT film in the thin film stacked structure 14 obtained by φ scanning;
FIG. 7 is a plan view of an optical deflection element according to a first embodiment of the present invention;
FIG. 8 is a cross-sectional view of the optical deflection element according to the first embodiment of the present invention;
FIG. 9 is a cross-sectional view of an optical deflection element according to a second embodiment of the present invention;
FIG. 10 is a cross-sectional view of an optical deflection element according to a fourth embodiment of the present invention;
FIG. 11 is a cross-sectional view of the optical deflection element according to the fourth embodiment of the present invention; and
FIG. 12 shows a relation between propagation loss and crystallinity of a core layer according to a fifth embodiment of the present invention.

### BEST MODE FOR CARRYING OUT THE INVENTION

Below, embodiments of the present invention are explained with reference to the accompanying drawings.

### Stacked Structure of Optical Deflection Element of Present Invention

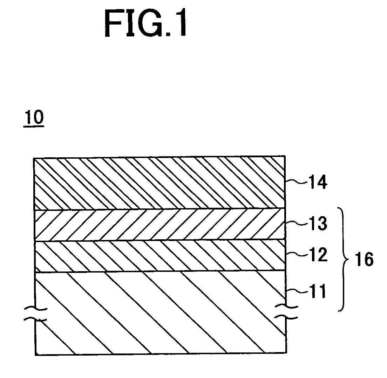

FIG. 1 is a cross-sectional view of a stacked structure as a basis of an optical deflection element according to the present invention.

As illustrated in FIG. 1, a stacked structure 10 includes an intermediate layer 12, a conductive layer 13, and an oxide layer 14, which are sequentially stacked on a single crystal substrate 11.

Inventors of the present invention found that in the stacked structure 10, if the single crystal substrate 11 is formed from a silicon single crystal substrate or a gallium arsenide (GaAs) substrate, the intermediate layer is formed from a magnesia spinel film, the conductive layer 13 is formed from a platinum group metal, it is possible to form an epitaxial metal film having good crystallinity on the single crystal substrate with the magnesia spinel film in between, the single crystal substrate being formed from an inexpensive and large-size silicon single crystal substrate or gallium arsenide (GaAs) substrate.

It was confirmed that the level of the crystallinity of the conductive layer 13 is similar to that of a conductive layer formed on an MgO single crystal substrate by direct epitaxial growth, and the crystallinity is good.

The stacked structure 10 according to the present invention is particularly useful compared to a stacked structure of the related art in respect of allowing utilization of an inexpensive and large-size single crystal substrate.

In addition, the inventors of the present invention found that the oxide layers formed on the conductive layer in the stacked structure 10 accede the crystallinity of the conductive layer, and epitaxial films are formed with the (001) plane as the growing plane. In the present invention, the stacked structure 10 is applied to an optical deflection element.

Below, the stacked structure 10 is explained first.

The single crystal substrate 11 of the stacked structure 10 is formed from, for example, a silicon or gallium arsenide (GaAs) single crystal substrate. The thickness of the single crystal substrate 11 is about 500 *µ* m, and the principal plane thereof is set to be the (001) plane. By setting the principal plane to be the (001) plane, the plane directions of the layers epitaxially grown on the single crystal substrate are aligned, and finally, the plane direction of the oxide layer 14 can be set to that of the (001) plane.

In addition, use may also be made of a single crystal substrate 11 in which the principal plane is the (001) plane, but slightly inclined in a range from 0° to 4° . Because of slight unevenness on the surface of the single crystal substrate 11, crystal grain boundaries may occur in the intermediate layer 12. By using a single crystal substrate 11 with the principal plane being inclined, it is possible to align growing directions in the plane of the intermediate layer 12 to suppress occurrence of crystal grain boundaries.

The intermediate layer 12 is a 100 nm magnesia-spinel (MgAl₂O₄) film formed by epitaxial growth on the single crystal substrate 11 by CVD or the like. Specifically, the thickness of the intermediate layer 12 is from 80 nm to 600 nm. The magnesia-spinel film functioning as the intermediate layer 12, for example, grows along the (001) plane on the (001) plane of a silicon single crystal substrate 11. Because the (001) plane of the magnesia-spinel film is formed on the (001) plane of the single crystal substrate 11, the (001) direction of the magnesia-spinel film is in agreement with the (001) direction of the single crystal substrate 11.

The conductive layer 13 is epitaxially grown to 200 nm on the intermediate layer 12 from platinum group metals by RF sputtering. For example, the platinum group metals may include Ru, Rh, Pd, Os, Ir, Pt. Among them, Ir or Pt is preferable because superior crystal orientation is obtainable.

The conductive layer 13 is formed by growing the (001) plane of a platinum group metal or an alloys of platinum group metals on the (001) plane of the magnesia-spinel film. In the related art, an instance is reported in which an epitaxial magnesia-spinel film is formed on a silicon single crystal substrate, then a PZT film or others is formed thereon, but it has not been reported to sequentially stack a magnesia-spinel film and an epitaxial platinum-group metal or platinum-group- metal-alloy film on a silicon single crystal substrate.

In the present embodiment, on a thin film stacked structure 16, including the single crystal substrate 11, the magnesia-spinel intermediate layer 12, and a platinum-group metal or platinum-group- metal-alloy conductive layer 13, it is possible to epitaxially grow the crystal oxide layer 14 having a simple perovskite lattice, as described below.

Because the platinum-group metal or platinum-group-metal-alloy conductive layer 13 is conductive, and the specific resistance thereof is as low as 11 *µ*Ω*cm, it can be used as an electrode (for example, as a lower electrode 23 in the first embodiment). Particularly, when applying an electric field to the oxide layer 14 prepared by using RF_sputtering, because the conductive layer 13 is superior in the crystallinity, it is possible to prevent an increase of impedance caused by crystal grain boundaries.

The oxide layer 14 is constituted by a crystal structure including a simple perovskite lattice epitaxially grown on the conductive layer 13. The crystal structures having a simple perovskite lattice includes, for example, a perovskite structure, a bismuth layer structure, and a tungsten bronze structure, and so on. Crystals having these crystal structures are ferroelectrics and show the electro-optical effect.

Further, the oxide layer 14 may have a perovskite structure, for example, may be formed from PZT, represented by a general formula Pb(Zr₁₋ₓTiₓ)O₃ (0≦x≦1), or may be formed from crystals represented by general formulae Pb(B*'*_{1/3}B*"*_{2/3})O₃ (0≦x, y≦1, where, B' represents a bivalent metal, and B" represents a pentavalent metal), Pb(B*'*_{1/2}B*"*_{1/2})O₃ (0≦x, y≦1, where, B' represents a trivalent metal, and B" represents a pentavalent metal), Pb(B*'*_{1/2}B*"*_{1/2})O₃ (0≦x, y≦1, where, B' represents a bivalent metal, and B" represents a hexavalent metal); furthermore, by PLZT, represented by a general formula (Pb_{1-y}La_{y}) (Zr₁₋ₓTiₓ)O₃ (0≦x, y≦1), obtained by adding elements to PZT, or from crystals represented by general formulae Pb(B*'*_{1/3}B*"*_{2/3})ₓTi_{y}Zr_{1-x-y}O₃ (0≦x, y≦1, where, B' represents a bivalent metal, and B" represents a pentavalent metal), Pb(B*'*_{1/2}B*"*_{1/2})ₓTi_{y}Zr_{1-x-y}O₃ (0≦x, y≦1, where, B' represents a trivalent metal, and B" represents a pentavalent metal), or Pb(B*'*_{1/2}B*"*_{1/2})ₓTi_{y}Zr_{1-x-y}O₃ (0≦x, y≦1, where, B' represents a bivalent metal, and B" represents a hexavalent metal), or (Sr₁₋ₓBaₓ)TiO₃ (0≦x≦1).

Among the crystals represented by the general formula Pb(B*'*_{1/3}B*"*_{2/3})O₃ (0≦x, y≦1, B' represents a bivalent metal, and B" represents a pentavalent metal), the more preferable ones include Pb(Ni_{1/3}Nb_{2/3})O₃, Pb(Co_{1/3}Nb_{2/3})O₃, Pb(Mg_{1/3}Nb_{2/3})O₃, Pb(Zn_{1/3}Nb_{2/3})O₃, Pb(Mn_{1/3}Nb_{2/3})O₃, Pb(Ni_{1/3}Ta_{2/3})O₃, Pb(Co_{1/3}Ta_{2/3})O₃, Pb(Mg_{1/3}Ta_{2/3})O₃, Pb(Zn_{1/3}Ta_{2/3})O₃, and Pb(Mn_{1/3}Ta_{2/3})O₃. Furthermore, the much more preferable ones include Pb(Ni_{1/3}Nb_{2/3})O₃, Pb(Co_{1/3}Nb_{2/3})O₃, Pb(Mg_{1/3}Nb_{2/3})O₃, and Pb(Zn_{1/3}Nb_{2/3})O₃.

Among the crystals represented by the general formula Pb(B*'*_{1/2}B*"*_{1/2})O₃ (0≦x, y≦1, where, B' represents a trivalent metal, and B" represents a pentavalent metal), the more preferable ones include Pb(Fe_{1/2}Nb_{1/2})O₃, Pb(Sc_{1/2}Nb_{1/2})O₃, Pb(Sc_{1/2}Ta_{1/2})O₃·

Among the crystals represented by the general formula Pb(B*'*_{1/2}B*"*_{1/2})O₃ (0≦x, y≦1, where, B' represents a bivalent metal, and B" represents a hexavalent metal), the more preferable ones include Pb(Mg_{1/2}W_{1/2})O₃. Further, multicomponent crystals may also be used, such as 0.65Pb(Mg_{1/3}Nb_{2/3})O₃ - 0.35PbTiO₃, or 0.5Pb(Ni_{1/3}Nb_{2/3})O₃ - 0.35PbTiO₃ - 0.15PbZrO₃.

Crystals having a bismuth layer structure typically include SrBi₂Ta₂O₉ (SBT), Bi₄Ti₃O₁₂, (Bi₄₋ₓRₓ)Ti₃O₁₂ (R represents Y, Sc, or rare earth elements, 1≦x≦3), (SrₓBa₁₋ₓ)Bi₄Ti₄O₁₅, and PbBi₄Ti₄O₁₅. In addition, 1 - 2 % in mol of vanadium (V), or tungsten (W) may be added to the above crystals.

Crystals having a tungsten bronze structure typically include Ba₂NaNb₃O₁₅, and Ba₁₋ₓSrₓNb₂O₆.

The oxide layer 14 can be formed by any method applicable to a large area substrate, for example, CVD, CSD (chemical Solution Deposition), the sol-gel process, PLD (Pulse Laser Deposition), MOCVD (Metal Organic CVD), or the like, and CSD is preferable because it is capable of film formation on comparatively a large area substrate.

A crystal semi-conductive oxide layer exhibiting semi-conductivity and having a perovskite lattice, or a crystal conductive oxide layer exhibiting conductivity and having a perovskite lattice, can be formed between the conductive layer 13 and the oxide layer 14. For example, SrTiO₃ doped with Nb or La may be preferably used as the semi-conductive oxide. For example, the dose is set to be 1% in atoms. In addition, the conductive oxide may be SrRuO₃, CaRuO₃, LaRuO₃, LaₓSr₁₋ₓCoO₃ (0≦x≦1), or LaₓSr₁₋ₓMnO₃ (0≦x≦1).

In order to induce variation of the refractive index by the electro-optical effect, if an electric field is applied to the oxide layer 14, and the electric polarization of the oxide layer 14 is reversed repeatedly by switching ON or switching OFF the electric field or reversing the direction thereof, because of lattice defects such as oxygen deficiency at the interface between the conductive layer 13 and the oxide layer 14, the spontaneous polarization of the oxide layer 14 declines, and at the same time, the electro-optical effect may also degrade.

By forming a crystal semi-conductive oxide layer or a crystal conductive oxide layer between the conductive layer 13 and the oxide layer 14, it is possible to suppress declination of the spontaneous polarization, and prevent narrowing of the variable range of the refractive index induced by the electro-optical effect.

In addition, as described below, an upper electrode is formed on the oxide layer 14 in the optical deflection element. Similarly, a crystal semi-conductive or conductive oxide layer exhibiting semi-conductivity or conductivity and having a perovskite lattice can be formed at the interface of the oxide layer 14 and the upper electrode.

Below, a method of fabricating the above stacked structure is described.

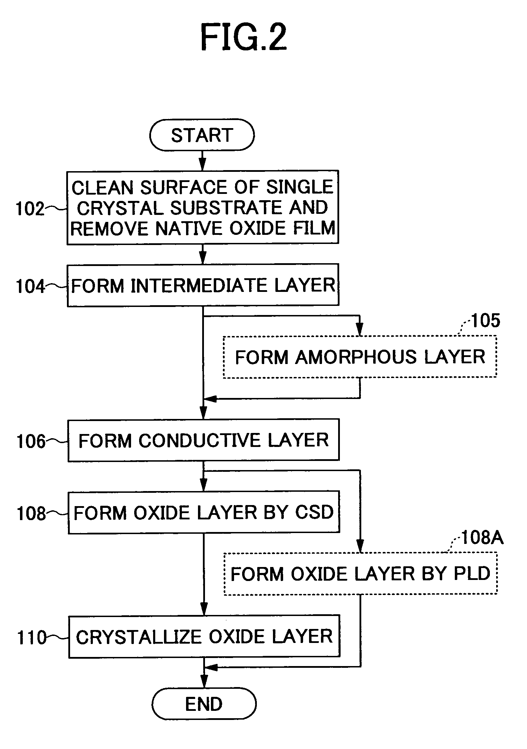

FIG. 2 is a flowchart illustrating a process of fabricating the above stacked structure.

As illustrated in FIG. 2, first, after cleaning the single crystal substrate 11, a native oxide film of the single crystal substrate 11 is removed by using a diluted hydrofluoric acid. After removing the native oxide film, a crystalline surface of the single crystal substrate 11 is exposed (S102).

Next, by CVD, MBE, or others, the magnesia-spinel intermediate layer 12 is epitaxially grown on the single crystal substrate 11, the native oxide film in which has been removed (S104). CVD is preferable because it results in a uniform film to be formed on a large area single crystal substrate 11 of a diameter of, for example, about 300 mm. When using CVD, the elements constituting the magnesia-spinel film are evaporated by heating in respective source chambers, and fed into a chamber for film formation by a carrier gas. The magnesia-spinel film is deposited to a thickness of 80 nm - 600 nm by heating the single crystal substrate 11 to 750 °C to 1050 °C and by setting a film-formation speed of 5 nm/minute to 30 nm/minute.

Next, on the magnesia-spinel intermediate layer 12, the conductive layer 13 is formed by epitaxial growth (S106). Specifically, the substrate is heated to and is maintained at a temperature higher than 400 °C, preferably higher than 500 °C, and a platinum group metal is deposited in an argon gas atmosphere by RF sputtering to a thickness of 20 nm - 2000 nm (S106). In this process, if a slight amount of oxygen is added to the argon gas atmosphere, for example, oxygen gas at 1 sccm to 3 sccm is added to the argon gas atmosphere at 30 sccm, it is possible to form the conductive layer 13 of better crystallinity. This prevents separation of oxygen atoms in the magnesia-spinel from the surface of the intermediate layer 12, retains the crystallinity of the surface of the magnesia-spinel film, and reflects the good crystallinity to the conductive layer 13.

Next, the oxide layer 14 is formed on the conductive layer 13, for example, by CSD (S108). Specifically, a PZT solution, in which concentrations of Pb, Zr, Ti have been adjusted, is applied on the conductive layer 13 by spin-coating, the solution is volatilized and is dried. When necessary, the spin-coating process can be repeated to obtain a desired thickness.

Next, thermal treatment is executed in order to crystallize and epitaxially grow the oxide layer 14 (S110), specifically, in an oxygen atmosphere at 500 °C to 800 °C for 5 to 15 minutes by using a halogen lamp annealing apparatus capable of RTA (Rapid Thermal Annealing) or a furnace.

The oxide layer 14 may also be formed by PLD (S108A). Specifically, the pressure in a vacuum chamber is set to be 26.6 Pa (200 mTorr), a PZT target and a substrate are arranged therein, with films up to the conductive layer 13 being formed on the substrate. A laser beam is emitted on the target, and the material of the target is atomized and is deposited on the conductive layer 13 through a plume. The thickness by deposition is adjusted according to the output of the laser and the repetition frequency of irradiation. In addition, when forming a film on a large area substrate, by moving the target or the substrate relative to the plume, a uniform and thick oxide layer can be formed.

In this way, the stacked structure 10 shown in FIG. 1 can be formed.

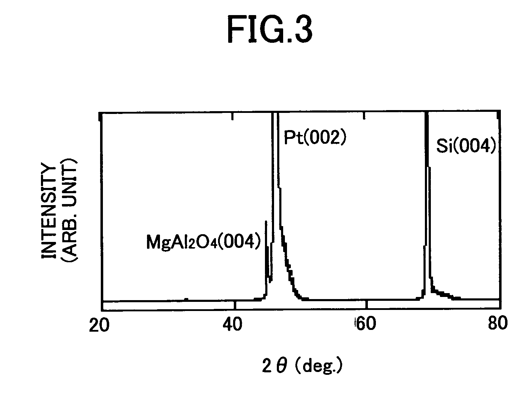

FIG. 3 shows an X-ray diffraction pattern of the thin film stacked structure 16, including a silicon single crystal substrate 11, the magnesia-spinel layer 12, and a platinum-group metal layer 13 in the stacked structure 10. This thin film stacked structure 16 is obtained by using silicon for the single crystal substrate 11, a magnesia-spinel layer as the intermediate layer 12, and a platinum film as the conductive layer 13 in the present embodiment as described above. FIG. 3 presents the measured intensity of X-rays at a diffraction angle of 2θ, with the X-rays being incident on the surface of the thin film stacked structure 16 at an incidence angle of θ (2θ-θ method).

As illustrated in FIG. 3, diffraction peaks of a (004) plane of the silicon single crystal substrate 11, a (004) plane of the magnesia-spinel film 12, and a (002) plane of the platinum film are observed. Focusing on the diffraction peak of the platinum film, while the diffraction peak of the (002) plane of the platinum film appears at 2θ =46° , for example, diffraction peaks of the (111) plane (2 θ=39° ), and the (011) plane (2θ=65° ) are not observed. From this result, it is clear that the platinum film has a principal plane (001), and the layer-stacking direction is completely aligned in the (001) direction. In addition, the diffraction peak of the (004) plane of the magnesia-spinel film is observed. Therefore, it is revealed that on the (001) plane of the silicon single crystal substrate 11, the magnesia-spinel film and the platinum film thereon are aligned along one axis.

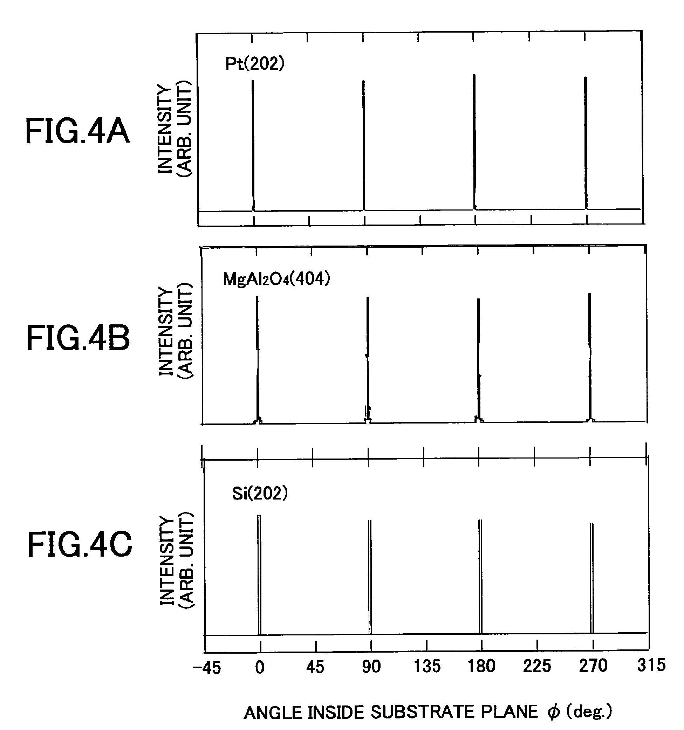

FIGs. 4A through 4C show X-ray diffraction patterns of the component films of the thin film stacked structure 16 in FIG. 3 obtained by rotating the sample only to scan the φ angle thereof.

Specifically, FIG. 4A shows the X-ray diffraction pattern obtained by φ scanning of the (202) plane of the platinum film, FIG. 4B shows the X-ray diffraction pattern obtained by φ scanning of the (404) plane of the magnesia-spinel film, and FIG. 4C shows the X-ray diffraction pattern obtained by φ scanning of the (202) plane of the silicon single crystal substrate. As illustrated in FIGs. 4A through 4C, the platinum film, the magnesia-spinel film, and the silicon single crystal substrate 11 have four symmetric axes at the same angles. That is, the thin film stacked structure 16 is epitaxially grown on the silicon single crystal substrate 11 in a cube-on-cube manner.

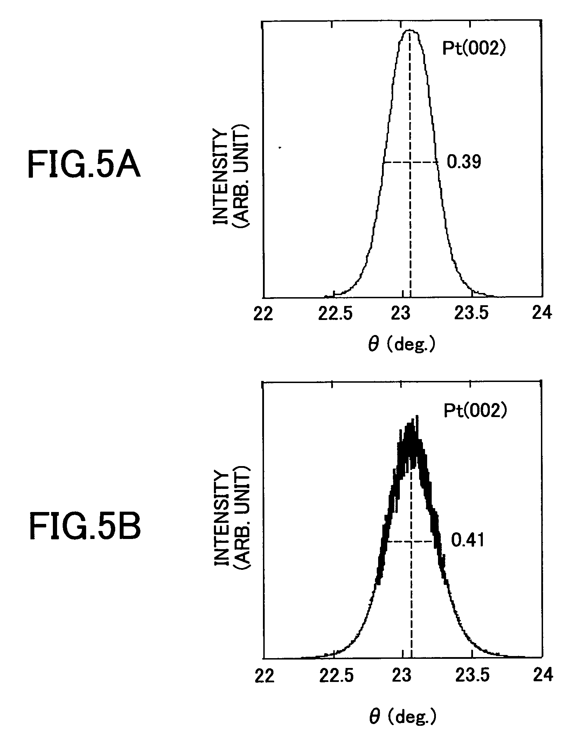

FIG. 5A shows a rocking curve of the (002) plane of the platinum film of the thin film stacked structure 16.

FIG. 5B shows a rocking curve of the (002) plane of a platinum film epitaxially grown on a MgO single crystal substrate, not concerned with the present invention.

As illustrated in FIG. 5A, the FWHM (Full Widths at Half Maximum) of the diffraction peak of the (002) plane of the platinum film is 0.39° in the present embodiment. On the other hand, the FWHM of the diffraction peak of the (002) plane of the platinum film is 0.41° , roughly the same, as shown in FIG. 5B, not concerned with the present invention. That is, the platinum film of the conductive layer 13 of the present embodiment is superior in crystallinity.

Crystallinity of the platinum film is important in determining the crystallinity of the oxide layer, such as PZT, which is eptaxially grown on the platinum film, and good crystallinity of the platinum film to the utmost extent is preferable. According to the present embodiment, because the platinum film is equivalent to that epitaxially grown on a MgO single crystal substrate, it is possible to grow an oxide layer of good crystallinity.

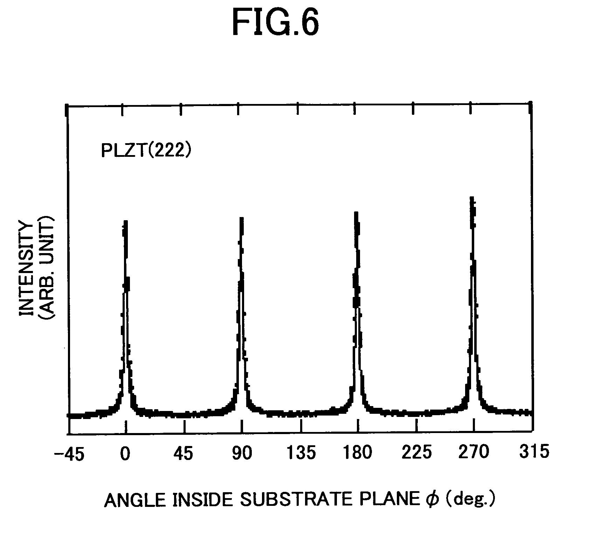

FIG. 6 shows an X-ray diffraction pattern of the oxide layer according to the present embodiment obtained by φ scanning.

The oxide layer is formed by applying a PLZT solution by CSD (PLZT 113/3/45/55, concentration 15% in mass) and crystallization to obtain a PLZT film. Here, "PLZT 113/3/45/55" indicates the molar concentration ratio of Pb, La, Zr, and Ti is 113: 3: 45: 55. The φ scanning is performed of the (222) plane of the PLZT film.

As illustrated in FIG. 6, the PLZT film acting as the oxide layer 14 has four symmetric axes at the same angles as the single crystal substrate 11/the intermediate layer 12/the conductive layer 13, as illustrated in FIGs. 4A through 4C. That is, the oxide layer 14 is epitaxially grown on the conductive layer 14 in a cube-on-cube manner.

As described above, the stacked structure is formed by epitaxially growing the magnesia spinel intermediate layer 12, the conductive layer 13, and the oxide layer 14 sequentially on the silicon or GaAs single crystal substrate 11, the conductive layer 13 below the oxide layer 14 having a good crystallinity equivalent to the platinum film epitaxially grown on a MgO single crystal substrate as in the related art, and hence, the oxide layer formed on the conductive layer 13 is an epitaxial layer and is superior in crystallinity.

Therefore, another oxide layer formed on the stacked structure, specifically, on the oxide layer 14, is also an epitaxial layer and is superior in crystallinity. As a result, with the oxide layer as a cladding layer, and another oxide layer as a core layer, a waveguide optical deflection element is obtained which is able to greatly reduce optical propagation loss caused by scattering because of the good crystallinity of the oxide core layer, and greatly reduce loss caused by total reflection at the interface between the oxide core layer and the oxide cladding layer because of the good crystallinity of the oxide cladding layer.

In addition, in the stacked structure, because the conductive layer is a platinum film or other metal film or metal oxide film, which is of good crystallinity and has a low electrical resistance, it is possible to prevent an increase of impedance at high frequencies caused by crystal grain boundaries or lattice defects.

Below, embodiments of the present invention are explained with reference to the accompanying drawings.

### First Embodiment

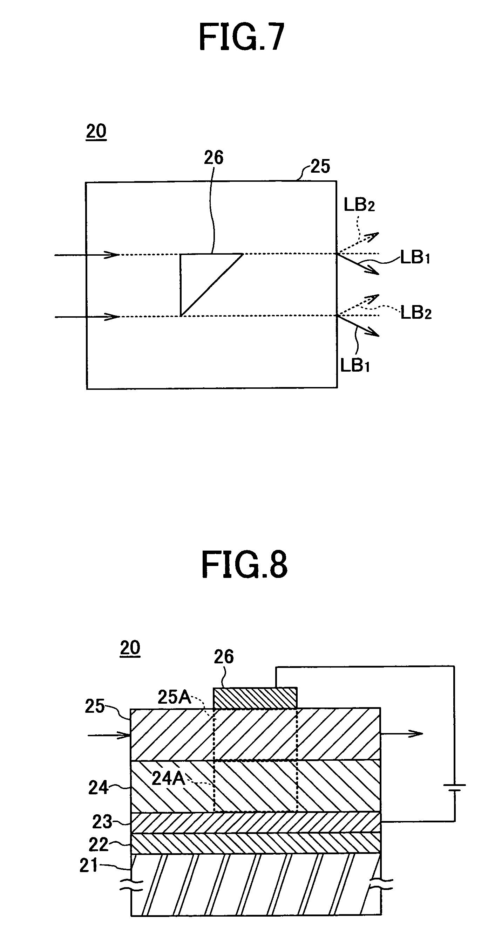

FIG. 7 is a plan view of an optical deflection element according to a first embodiment of the present invention.

FIG. 8 is a cross-sectional view of the optical deflection element according to the first embodiment of the present invention.

As illustrated in FIG. 7 and FIG. 8, the optical deflection element 20 of the present embodiment includes a magnesia spinel film 22, a lower electrode 23, a lower cladding layer 24, a core layer 25, and an upper electrode 26, which are sequentially stacked on a silicon single crystal substrate 21. The magnesia spinel film 22, the lower electrode 23, a PLZT film acting as the lower cladding layer 24, and a PZT film acting as the core layer 25 are epitaxially grown on respective underlying layers thereof and accede the crystallinity of the respective underlying layers.

The optical deflection element 20 is a waveguide optical deflection element. Here, for example, the refractive index of the PZT core layer 25 is set to be 2.45, and the refractive index of the PLZT lower cladding layer 24 is set to be 2.36. That is, the refractive index of the PLZT lower cladding layer 24 is less than the refractive index of the PZT core layer 25. In addition, although another cladding layer is not provided on the core layer 25, because the refractive index of the air approximately is 1.0, lower than the refractive index of the core layer 25, on the upper surface of the core layer 25, the light propagated in the core layer 25 is totally reflected. In addition, considering optical loss caused by absorption in the lower cladding layer 24, it is sufficient that the difference between refractive indexes of the lower cladding layer 24 and the core layer 25 amounts to 0.5% of the refractive index of the core layer 25. If the difference is less than 0.5%, it becomes difficult for the light propagated in the core layer 25 to be totally reflected at the interface with the lower cladding layer 24, and the optical loss increases.

In the optical deflection element 20, because of a voltage applied to the lower electrode 23 and the upper electrode 26, refractive index variable regions 25A, 24A in which the refractive index varies are formed in the lower cladding layer 24 and the core layer 25 below the upper electrode 26 due to the electro-optical effect. The refractive index variable regions 25A, 24A are formed to be a triangular column having an upper surface of a shape the same as the upper electrode 26.

The light incident into the core layer 25 is repeatedly totally reflected at the interface between the core layer 25 and the lower cladding layer 24, and at the upper side of the core layer 25 (interface between the core layer 25 and the air), thereby, being propagated in the core layer 25. At the interface between the core layer 25 and the refractive index variable region 25A, the light propagated through the core layer 25 is deflected according to the law of refraction. Namely, the light incident, parallel or perpendicular, on the interface between the core layer 25 and the refractive index variable region 25A travels straight without being deflected, and the light incident at other angles is deflected. At the incident side of the refractive index variable region 25A, as illustrated in FIG. 8, because the base of the upper electrode 26 is set to be perpendicular to the light, the incident light travels straightly without being deflected. Then, the light is deflected at an emitting portion of the refractive index variable region, corresponding to the inclined side of the upper electrode 26, and the deflected light, for example, deflected in a range indicated by arrows LB1 and LB2, is emitted from an emitting plane of the optical deflection element 20. For example, in the optical deflection element 20 of the present embodiment, when a voltage of 25 V to 100 V is applied and scanned on the upper electrode 26 relative to the lower electrode 23, it is possible to deflect the light by 0.5° to 2° . Further, by applying the voltage, the refractive index varies in not only the refractive index variable region 25A of the core layer 25, but also the refractive index variable region 24A of the lower cladding layer 24. The change of the refractive index of the refractive index variable region 25A of the core layer 25 is small, amounting to about 0.5% of the refractive index of the core layer 25. This enables prevention of optical loss in the refractive index variable region 25A of the core layer 25.

Next, a description is made of an example of a method of fabricating the optical deflection element 20.

First, after cleaning the silicon single crystal substrate 21, which is two inches in diameter and has a principal plane (001), the silicon single crystal substrate 21 is immersed in a 9% (in mass) diluted hydrofluoric acid to remove a native oxide film in the silicon single crystal substrate 21.

Next, a magnesia-spinel intermediate layer is formed on the silicon single crystal substrate 21 to a thickness of 100 nm by CVD. Specifically, the silicon single crystal substrate 21 is arranged in a CVD chamber for film formation, and the substrate temperature is maintained at 900 °C. MgCl₂ is used as the material of Mg. In a Mg source chamber, the MgCl₂ material is heated to 500 °C and evaporated, and the evaporation product of MgCl₂ is fed into the film formation chamber with hydrogen gas as a carrier gas.

The Al metal is used as the material of Al. In a Al source chamber, the Al metal is heated to 550 °C and evaporated, and AlCl₃ is fed into the film formation chamber with hydrogen chloride gas and hydrogen gas as a carrier gas.

Further, carbonate gas and hydrogen gas are introduced to mix the evaporation product of MgCl₂ and AlCl₃ and carry the mixed gas to the film formation chamber. In the film formation chamber, the magnesia-spinel film is deposited by heating the silicon single crystal substrate to 900 °C and setting a film-formation speed of 20 nm/minute.

Next, on the magnesia-spinel layer, a platinum film is formed by epitaxial growth. Specifically, the pressure in a sputtering chamber is set to be 1 Pa (7.5 x 10⁻³ Torr), and the substrate is heated to 600 °C to epitaxially grow the platinum film while supplying argon gas at 30 sccm and oxygen gas at 1 sccm.

Next, a PLZT film acting as the lower cladding layer is formed on the platinum film by CSD. Specifically, a commercial PLZT solution (PLZT 9/65/35, concentration 17% in mass) is dropped to the platinum film by an amount of 0.3 cm³, and is rotated at 3000 rpm for 20 minutes. Here, "PLZT 9/65/35" indicates the molar concentration ratio of La, Zr, and Ti is 9 : 65 : 35.

Next, the substrate with PLZT being applied is heated to 140 °C for five minutes on a pre-heated hot plate to volatilize the solvent of the PLZT solution, and is further heated to 350 °C for five minutes to decompose the PLZT precursor, and then is cooled to room temperature.

Next, RTA (Rapid Thermal Annealing) is executed to crystallize the PLZT film, for example, by using a halogen lamp annealing apparatus. Specifically, the substrate is arranged in the halogen lamp annealing apparatus with oxygen gas being supplied at 5 L/minute, and is heated to 650 °C for 10 minutes to crystallize the PLZT film. The crystallized PLZT film is 200 nm thick. The processes from applying the PLZT solution to crystallizing the PLZT film are repeated for eleven times, and the total thickness of the PLZT film is 2.2 *µ*m.

Next, a PZT film acting as the core layer is formed on the PLZT lower cladding layer by CSD. Specifically, a commercial PZT solution (PZT 52/48, concentration 17% in mass) is dropped to the PLZT film by an amount of 0.3 cm³, and is rotated at 3000 rpm for 20 minutes.

Next, the substrate with PZT being applied is heated to 140 °C for five minutes on a pre-heated hot plate to volatilize the solvent of the PZT solution, and is further heated to 350 °C for five minutes to decompose the PZT precursor, and then is cooled to room temperature.

Next, the PZT film is crystallized, for example, by using a halogen lamp annealing apparatus. Specifically, the substrate is arranged in the halogen lamp annealing apparatus with oxygen gas being supplied at 5 L/minute, and is heated to 650 °C for 10 minutes to crystallize the PZT film. The crystallized PZT film is 200 nm thick. The processes from applying the PZT solution to crystallizing the PZT film are repeated for thirteen times, and the total thickness of the PZT core layer is 2.6 *µ*m.

Next, a platinum film upper electrode 26 is formed by sputtering on the PZT core layer 25 to 150 nm. Specifically, a right-angle triangular pattern is arranged on the PZT film, the pressure in a sputtering chamber is set to be 1 Pa (7.5 x 10⁻³ Torr), argon gas at 30 sccm is supplied, and a platinum film is formed. The upper electrode 26 is a right-angle triangle having a base of 300 *µ*m, a height of 1000 *µ*m, and the base is arranged to be the incident side.

Note that it is not necessary to form the upper electrode 26 by epitaxial growth, but it can be formed by sputtering or evaporation, and the material thereof is not limited to platinum (Pt), but can also be other metals, or alloys, or conductive oxides. Metals or alloys which can be preferably used as the upper electrode 26 include those hard to be oxidized, such as platinum-group metals, Ru and so on. Conductive oxides may include IrO₂, RuO₂ and so on.

Next, annealing is executed to eliminate damage in the PZT film induced during sputtering. Specifically, the substrate is heated in an electric furnace at a temperature of 600 °C for one hour with oxygen gas being supplied at a flow rate of 5 liters per minute.

When forming the upper electrode 26, the surface of the PZT film is subjected to damage. By thermal treatment, distortion is eliminated, the residual stress is reduced, and the crystal property of the PZT film surface is improved.

Next, side surfaces on the incident side and the emitting side are polished so as to allow incidence and emission of a laser beam.

In this way, the optical deflection element 20 of the present embodiment is formed.

A structure satisfying the following crystallographic relation is obtained, that is, PZT film (the core layer 25) (001) // PLZT film (the lower cladding layer 24) (001) // Pt film (the lower electrode 23) (001) // the magnesia spinel film 22 (001) // the silicon single crystal substrate 21 (001), which are formed by epitaxial growth. In addition, a structure having the following in-plane orientation is obtained, that is, PZT film (the core layer 25) [001] // PLZT film (the lower cladding layer 24) [001] // Pt film (the lower electrode 23) [001] // the magnesia spinel film 22 [001] // the silicon single crystal substrate 21 [001].

### Second Embodiment

The optical deflection element of the present embodiment is basically the same as the optical deflection element 20 of the first embodiment, except that an upper cladding layer is further provided on the core layer.

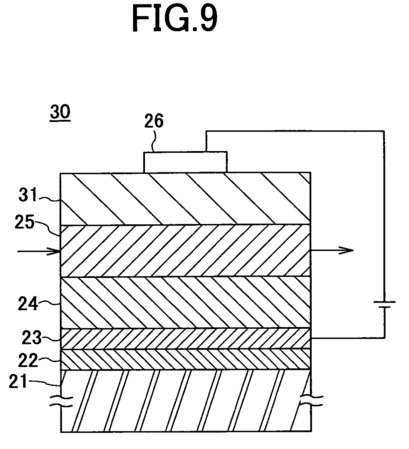

FIG. 9 is a cross-sectional view of an optical deflection element according to the second embodiment of the present invention. In FIG. 9, the same reference numbers are assigned to the same elements as previously described, and overlapping descriptions are omitted.

As illustrated in FIG. 9, an optical deflection element 30 of the present embodiment includes a magnesia spinel film 22, a lower electrode 23, a lower cladding layer 24, a core layer 25, an upper cladding layer 31, and an upper electrode 26, which are sequentially stacked on a silicon single crystal substrate 21. Among the above films, the magnesia spinel film 22, the lower electrode 23, the PLZT lower cladding layer 24, the PZT core layer 25, and the PLZT upper cladding layer 31 are epitaxially grown on respective underlying layers thereof and accede the crystallinity of the respective underlying layers.

The optical deflection element 30, the same as the optical deflection element 20 in the first embodiment, is a waveguide optical deflection element, and the PZT core layer 25 is sandwiched by the PLZT lower cladding layer 24 and the PLZT upper cladding layer 31. In the first embodiment, the air (refractive index: 1.0) functions as an upper cladding layer, while in the present embodiment, a PLZT film is used as an upper cladding layer. The refractive index of the PZT core layer 25 is set to be 2.45, and the refractive indexes of the PLZT lower cladding layer 24 and the PLZT upper cladding layer 31 are set to be 2.36. That is, the refractive indexes of the lower cladding layer 24 and the upper cladding layer 31 are less than the refractive index of the core layer 25.

In addition, considering optical loss caused by absorption in the lower cladding layer 24 and the upper cladding layer 31, the difference between the refractive index of the core layer 25 and the refractive indexes of the lower cladding layer 24 and the upper cladding layer 31 satisfies the relation between the refractive index of the core layer 25 and the refractive index of the lower cladding layer 24, as described in the first embodiment.

Thus, the light incident into the core layer 25 is repeatedly totally reflected at the interfaces between the core layer 25 and the lower cladding layer 24 and the upper cladding layer 31, thereby, being propagated in the core layer 25.

The upper electrode is formed in the same way as in the first embodiment, and descriptions are omitted.

The PLZT upper cladding layer 31 is formed on the core PZT film 25 by the same process and the same materials as the PLZT lower cladding layer 24, and the total thickness of the PLZT film is 2.2 *µ*m. In this way, the optical deflection element 30 of the present embodiment is formed.

A structure satisfying the following crystallographic relation is obtained, that is, PLZT film (the upper cladding layer 31) (001) // PZT film (the core layer 25) (001) // PLZT film (the lower cladding layer 24) (001) // Pt film (the lower electrode 23) (001) // the magnesia spinel film 22 (001) // the silicon single crystal substrate 21 (001), which are formed by epitaxial growth. In addition, a structure having the following in-plane orientation is obtained, that is, PLZT film (the upper cladding layer 31) [001] // PZT film (the core layer 25) [001] // PLZT film (the lower cladding layer 24) [001] // Pt film (the lower electrode 23) [001] // the magnesia spinel film 22 [001] // the silicon single crystal substrate 21 [001].

It should be noted that the upper cladding layer 31 can be formed not only by the same materials as the lower cladding layer 24, but also by other materials, for example, a silicon oxide film, as long as the relation with the refractive index of the core layer 25 is satisfied.

### Third Embodiment

The optical deflection element of the present embodiment is basically the same as the optical deflection element 30 of the second embodiment, except that an iridium film is formed to replace the platinum lower electrode 23. Below, descriptions of the same fabrication process as that in the second embodiment are omitted, and reference numbers in FIG. 9 are used, which illustrates the optical deflection element 30 of the second embodiment.

The iridium film is formed on the magnesia-spinel layer 22 by sputtering to 200 nm. Specifically, the pressure in a sputtering chamber is set to be 1 Pa (7.5 x 10⁻³ Torr), and the substrate is heated to 600 °C to epitaxially grow the iridium film while supplying argon gas at 30 sccm and oxygen gas at 1 sccm.

According to the present embodiment, the growing direction of the iridium film is (001), the in-plane orientation of the iridium film is [001], the same as [001] of the other layers.

### Fourth Embodiment

The optical deflection element of the present embodiment is basically the same as the optical deflection element of the second embodiment, except that a thermal oxide film is provided between the silicon single crystal substrate and the magnesia spinel film, further, two upper electrodes and a prism are provided on the upper cladding layer.

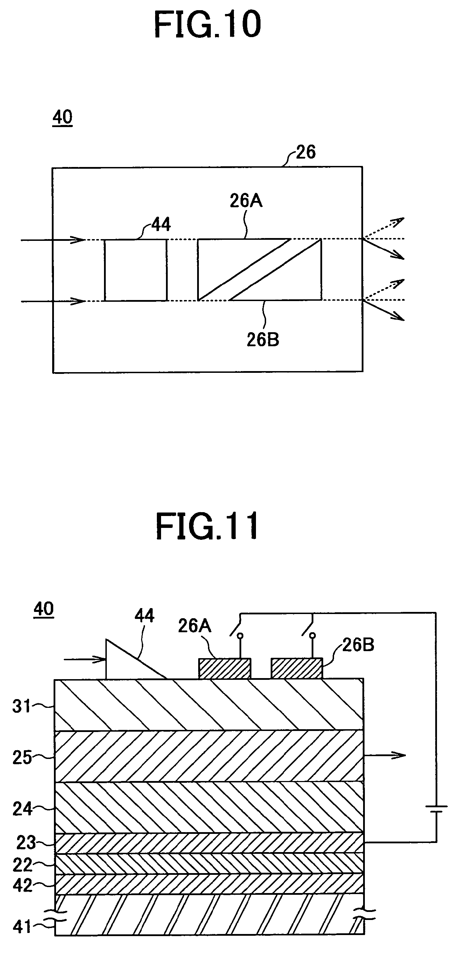

FIG. 10 is a cross-sectional view of an optical deflection element according to the fourth embodiment of the present invention. In FIG. 10, the same reference numbers are assigned to the same elements as previously described, and overlapping descriptions are omitted.

FIG. 11 is a cross-sectional view of the optical deflection element according to the fourth embodiment of the present invention.

As illustrated in FIG. 10 and FIG. 11, the optical deflection element 40 of the present embodiment includes a thermal oxide film 42, a magnesia spinel film 22, a lower electrode 23, a lower cladding layer 24, a core layer 25, an upper cladding layer 31, a first upper electrode 26A, and a second upper electrode 26B, which are sequentially stacked on a silicon single crystal substrate 41. The magnesia spinel film 22, the lower electrode 23, the lower cladding layer 24, the core layer 25, and the upper cladding layer 31 are epitaxially grown on respective underlying layers thereof and accede the crystallinity of the respective underlying layers.

In the optical deflection element 40, a laser beam is incident on a prism 44 arranged on the upper cladding layer 31, and is propagated to the core layer 25 through the upper cladding layer 31. The light being propagated in the core layer 25 is deflected, and the deflected light is emitted from an emitting plane of the optical deflection element 40 to an in-plane direction of the core layer.

Here, due to two refractive index variable regions 25A, 25B, (not shown) formed by the first upper electrode 26A and the second upper electrode 26B, a wide deflection angle is obtainable.

Next, a description is made of an example of a method of fabricating the optical deflection element 40.

First, by using a silicon single crystal substrate which is two inches in diameter and has a principal plane (001), films up to the magnesia-spinel intermediate layer are formed, in the same way as the first embodiment.

Next, a thermal treatment is executed at atmosphere pressure with the substrate being heated at a temperature of 1000 °C to 1100 °C for 30 minutes to three hours while supplying oxygen gas at a flow rate of 5 liter per minute. Due to this thermal treatment, oxygen diffuses into the silicon single crystal substrate 41 through the magnesia spinel intermediate film 22, and the thermal oxide film 42 is formed on the surface of the silicon single crystal substrate 41. By using water vapor instead of oxygen gas, wet annealing may be executed. In this case, the temperature conditions and time of thermal treatment are the same as those when oxygen gas is used.

Because of the thermal oxide film 42, the bonding is eliminated between the silicon single crystal substrate 41 and the magnesia spinel film 22, and this enables self re-arrangement of the magnesia spinel film 22 without being constrained by the silicon single crystal substrate 41, and atoms can be easily moved by a thermal treatment. As a result, the crystallinity of the magnesia spinel film 22can be further improved. The total thickness of the thermal oxide film 42 and the magnesia spinel film 22 is 150 nm. When using nitrogen gas instead of oxygen gas, however, the thermal oxide film 42 is not formed, and further improvement of the crystallinity of the magnesia spinel film 22 is not observed.

Next, on the magnesia-spinel layer 22, a platinum film 23 is formed by sputtering to 200 nm. Specifically, the pressure in a sputtering chamber is set to be 1 Pa (7.5 x 10⁻³ Torr), and the substrate is heated to 600 °C to epitaxially grow the platinum film 23 while supplying argon gas at 30 sccm and oxygen gas at 1 sccm.

Next, a (Ba, Sr)TiO₃ lower cladding layer 24 is formed by PLD. Specifically, a (Ba_{0.6}Sr_{0.4})TiO₃ target is used. The pressure in a chamber is set to be 13.3 Pa (100 mTorr), and the substrate is heated to 800 °C while supplying oxygen gas at 2.8 sccm. A laser beam from a Nd:YAG laser (wavelength: 355 nm) is emitted on the target for 200 minutes with the repetition frequency to be 10 Hz, and thereby, forming a 3.0 *µ*m thick (Ba_{0.6}Sr_{0.4})TiO₃ film.

Next, the target is changed to form the PZT core film 25 on the lower cladding layer 24. Specifically, a PZT 10/90 target is used, the pressure in the chamber is set to be 2.7 Pa (20 mTorr), and the substrate is heated to 650 °C while supplying oxygen gas at 6 sccm. A laser beam from a Nd:YAG laser (wavelength: 355 nm) is irradiated on the target for 200 minutes with the repetition frequency to be 10 Hz, and thereby, forming a 3.0 *µ*m thick PZT film.

Next, a (Ba, Sr)TiO₃ upper cladding layer 31 is formed on the core layer 25 by PLD. Specifically, a (Ba_{0.6}Sr_{0.4})TiO₃ target is used, the pressure in a chamber is set to be 13.3 Pa (100 mTorr), and the substrate is heated to 800 °C while supplying oxygen gas at 2.8 sccm. A laser beam from a Nd:YAG laser (wavelength: 355 nm) is emitted on the target for 200 minutes with the repetition frequency to be 10 Hz, and thereby, forming a 3.0 *µ*m thick (Ba_{0.6}Sr_{0.4})TiO₃ film.

Next, 150 nm platinum film upper electrodes 26A and 26B are formed by sputtering on the (Ba_{0.6}Sr_{0.4})TiO₃ upper cladding layer 31. Specifically, a right-angle triangular pattern is arranged on the (Ba_{0.6}Sr_{0.4})TiO₃ upper cladding layer 31, the pressure in a sputtering chamber is set to be 1 Pa (7.5 x 10⁻³ Torr), argon gas at 30 sccm is supplied, and a platinum film is formed. Each of the upper electrodes 26A and 26B is a right-angle triangle having a base of 300 *µ*m, a height of 1000 *µ*m.

Next, annealing is executed to eliminate damage in the (Ba_{0.6}Sr_{0.4})TiO₃ upper cladding layer 31 induced during sputtering. Specifically, the substrate is heated in an electric furnace at a temperature of 600 °C for one hour with oxygen gas being supplied at a flow rate of 5 liters per minute.

Next, the side surface on the emitting side is polished so as to allow emission of a laser beam, and the prism is fixed to the upper cladding layer 31.

In this way, the optical deflection element 40 of the present embodiment is formed.

According to the optical deflection element 40 of the present embodiment, the thermal oxide film 42 is provided between the silicon single crystal substrate 41 and the magnesia spinel film 22. Because of the thermal oxide film 42, the bonding is eliminated between the silicon single crystal substrate and the magnesia spinel film, and this enables self re-arrangement of the magnesia spinel film 22 by thermal treatment without being constrained by the silicon single crystal substrate 41. As a result, the crystallinity of the magnesia spinel film 22 can be further improved, and this can improve the crystallinity of the lower electrode 23, the lower cladding layer 24, the core layer 25, and the upper cladding layer 31, which are formed on the magnesia spinel film 22.

### Fifth Embodiment

The optical deflection element of the present embodiment is basically the same as the optical deflection element of the fourth embodiment, except that conditions of fabricating the core layer are different.

In the present embodiment, a PZT core film 25 is formed on the lower cladding layer 24 by PLD. Specifically, a PZT 10/90 target is used, the pressure in the chamber is set to be 2.7 Pa (20 mTorr) to 27 Pa (200 mTorr), and the substrate is heated to 600 °C to 700 °C while supplying oxygen gas at 6 sccm. A laser beam from a Nd:YAG laser (wavelength: 355 nm) is irradiated on the target for 200 minutes with the repetition frequency to be 10 Hz, and thereby, forming a 3.0 *µ*m thick PZT film.

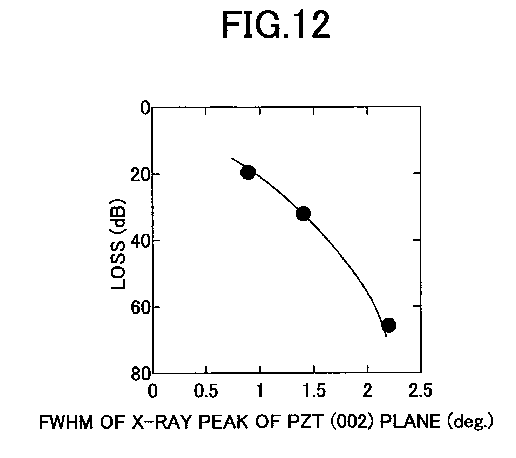

FIG. 12 shows a relation between the propagation loss and the crystallinity of the core layer 25, where the ordinate represents the propagation loss of the core layer 25, and the abscissa represents the FWHM of a peak obtained from the rocking curve of the (002) plane of the PZT core layer 25. The rocking curve of the (002) plane of a PZT film is measured, by using an X-ray deflectometer and by means of the 2θ - θ method, while changing the incident plane according to the angle of diffracted rays. The propagation loss is determined by measurement using a photo power meter of light detected with a photo detector.

As illustrated in FIG. 12, the PZT film formed under conditions of a pressure of 20 mTorr in the chamber and a substrate temperature of 650° C has a FWHM of 0.9°, and a loss of 19dB. It is revealed in FIG. 12 that the smaller the value of FWHM, namely, better crystallinity of the PZT film, the lower the propagation loss.

While the invention has been described with reference to preferred embodiments, the invention is not limited to these embodiments, but numerous modifications could be made thereto without departing from the basic concept and scope described in the claims.

For example, the first through the third embodiments may be combined.

In the first through the fourth embodiments, it is described that the lower or upper cladding layer is a PLZT film, and the core layer is a PZT film, but the materials of the oxide layer as mentioned in the embodiments can be used as long as the relation of the refractive indexes of the lower or upper cladding layer and the core layer is satisfied.

In the embodiments, deflection elements are described as examples, but the present invention is applicable to various waveguide elements utilizing the electro-optical effect, such as a Bragg reflection switch, a total reflection switch, a directional coupling switch, a Mach-Zehnder interference switch, a phase modulation element, a mode conversion element, and a wave length filter element.

### INDUSTRY APPLICABILITY

As is has become apparent by the above descriptions, according to the present invention, the second oxide layer, which is used for light beam propagation, is an epitaxial film, and superior in crystallinity, it is possible to provide an optical deflection element that is low in optical propagation loss, superior in optical properties, and low in fabrication cost, and a method of producing the optical deflection element.

## Claims

1. An optical deflection element, comprising:
a single crystal substrate;
an intermediate layer formed on the single crystal substrate, said intermediate layer being formed from a magnesia spinel film;
a lower electrode formed on the intermediate layer, said lower electrode being formed from a conductive layer including a platinum group metal;
a first oxide layer formed on the lower electrode;
a second oxide layer formed on the first oxide layer; and
an upper electrode formed on the second oxide layer;
wherein
the intermediate layer, the lower electrode, the first oxide layer, and second oxide layer are epitaxial films;
a refractive index of the second oxide layer is greater than a refractive index of the first oxide layer.

2. The optical deflection element as claimed in claim 1, wherein the single crystal substrate is a silicon single crystal substrate.

3. The optical deflection element as claimed in claim 2, further comprising:
an amorphous layer between the single crystal substrate and the intermediate layer.

4. The optical deflection element as claimed in claim 3, wherein the amorphous layer is a silicon oxide film.

5. The optical deflection element as claimed in claim 1, wherein the single crystal substrate is a gallium arsenide (GaAs) substrate.

6. The optical deflection element as claimed in claim 1, wherein the lower electrode has a main composition of Pt or Ir.

7. The optical deflection element as claimed in claim 1, wherein the second oxide layer has an electro-optical effect.

8. The optical deflection element as claimed in claim 1, wherein at least one of the first oxide layer and the second oxide layer has a crystal structure including a simple perovskite lattice.

9. The optical deflection element as claimed in claim 8, wherein the crystal structure having a simple perovskite lattice includes one of a perovskite structure, a bismuth layer structure, and a tungsten bronze structure.

10. The optical deflection element as claimed in claim 8, wherein the first oxide layer is a crystal layer represented by formulae (BaₓSr₁₋ₓ)TiO₃ (0≦x≦1), or (Pb_{1-y}La_{y})(Zr₁₋ₓTiₓ)O₃ (0≦x, y≦1).

11. The optical deflection element as claimed in claim 1, wherein the single crystal substrate, the intermediate layer, and the lower electrode have a (001) crystal orientation in a layer-stacking direction.

12. The optical deflection element as claimed in claim 10, wherein the first oxide layer and the second oxide layer have a (001) crystal orientation in a layer-stacking direction.

13. The optical deflection element as claimed in claim 1, wherein at least one of the first oxide layer and the second oxide layer is formed from one of Pb(Zr₁₋ₓTiₓ)O₃ (0≦x≦1), (Pb_{1-y}La_{y}) (Zr₁₋ₓTiₓ)O₃ (0≦x, y≦1), Pb(B*'*_{1/3}B*"*_{2/3})ₓTi_{y}Zr_{1-x-y}O₃ (1≦x, y≦1, where, B' represents a bivalent metal, and B" represents a pentavalent metal), Pb(B*'*_{1/2}B*"*_{1/2})ₓTi_{y}Zr_{1-x-y}O₃ (0≦x, y≦1, where, B' represents a trivalent metal, and B" represents a pentavalent metal; or B' represents a bivalent metal, and B" represents a hexavalent metal), (Sr₁₋ₓBaₓ)Nb₂O₆ (0≦x≦1), (Sr₁₋ₓBaₓ)Ta₂O₆ (0 ≦x≦1), PbNb₂O₆ (0≦x≦1), and Ba₂NaNb₅O₁₅.

14. The optical deflection element as claimed in claim 1, further comprising:
a third oxide layer between the second oxide layer and the upper electrode, said third oxide layer being formed by epitaxial growth on the second oxide layer;
wherein the refractive index of the second oxide layer is greater than the refractive index of the first oxide layer and a refractive index of the third oxide layer.

15. The optical deflection element as claimed in claim 14, wherein the third oxide layer has a crystal structure including a simple perovskite lattice.

16. The optical deflection element as claimed in claim 14, wherein the third oxide layer has a (001) crystal orientation in a layer-stacking direction.

17. A method of forming an optical deflection element, comprising the steps of:
forming an intermediate layer on a single crystal substrate from magnesia spinel;
forming a lower electrode on the intermediate layer from a conductive layer including a platinum group metal;
forming a first oxide layer on the lower electrode;
forming a second oxide layer on the first oxide layer; and
forming an upper electrode on the second oxide layer;
wherein the intermediate layer, the lower electrode, the first oxide layer, and the second oxide layer are formed by epitaxial growth.

18. The method as claimed in the claim 17, further comprising a step of:
providing a thermal treatment in an atmosphere including an oxygen gas or a water vapor between the step of forming the intermediate layer and the step of forming the lower electrode.

19. The method as claimed in the claim 18, further comprising a step of:
forming a thermal oxide film between the intermediate layer and the single crystal substrate.
